# FASCICULE DE BREVET EUROPEEN

(11) **EP 2 118 474 B1**
(45) Date de publication et mention de la délivrance du brevet: **18.08.2010**
(21) Numéro de dépôt: 08762059.7
(22) Date de dépôt: 11.02.2008
(51) Int. Cl.: F02K 1/38, F02K 1/48, B29C 70/54, C04B 35/00

(54) **PROCEDE DE FABRICATION D'UNE STRUCTURE A LOBES DE MELANGEUR DE FLUX EN CMC POUR MOTEUR AERONAUTIQUE A TURBINE A GAZ**
VERFAHREN ZUR HERSTELLUNG EINER MIT EINEM CMC-FLUSSMISCHER AUSGESTATTETEN STRUKTUR FÜR EINEN TURBINEN-LUFTMOTOR
METHOD OF MANUFACTURING A CMC FLOW MIXER LOBED STRUCTURE FOR A GAS TURBINE AEROENGINE

(30) Priorité: 12.02.2007 FR 0753201
(43) Date de publication de la demande: 18.11.2009
(73) Titulaire: Snecma Propulsion Solide, 33187 Le Haillan Cedex (FR)
(72) Inventeur: PHILIPPE, Eric, F-33700 Merignac (FR); LALANNE, Jean-Daniel, F-33160 Saint Medard En Jalles (FR); DUCHARLET, Pascal, F-33160 Saint Medard En Jalles (FR); COUPE, Dominique, F-33185 Le Haillan (FR)
(74) Mandataire: Joly, Jean-Jacques
(86) Numéro de dépôt international: PCT/FR2008/050207
(87) Numéro de publication internationale: WO 2008/104692

(56) Documents cités:
- WO-A-2006/035186

## Description

### Arrière-plan de l'invention

L'invention concerne la réalisation de mélangeurs de flux en matériau composite à matrice céramique (matériau CMC) pour moteurs aéronautiques à turbine à gaz à double flux.

Dans une turbine à gaz à double flux de moteur aéronautique, le flux admis en entrée à travers la soufflante est partagé en un flux primaire qui traverse le compresseur, la chambre de combustion et la turbine et un flux secondaire ou flux de soufflante qui contourne le compresseur, la chambre de combustion et la turbine. En sortie, le flux primaire "chaud" comprenant les gaz de combustion et le flux de soufflante "froid" sont mélangés.

Afin de réduire le bruit de jet éjecté, il est connu d'utiliser des mélangeurs à lobes qui favorisent le mélange entre les flux.

L'utilisation de matériau CMC pour réaliser de tels mélangeurs à lobes a été proposée afin de minimiser leur masse tout en conservant une bonne tenue mécanique. En effet, les matériaux CMC sont connus pour leurs propriétés thermostructurales, à savoir des propriétés mécaniques qui les rendent aptes à former des pièces de structure et la capacité de conserver ces propriétés à des températures élevées. Des matériaux CMC typiques comprennent un renfort fibreux en fibres réfractaires (carbone ou céramique) densifié par une matrice au moins en partie en céramique.

Un mélangeur à lobes en CMC est décrit dans le document W02006/035186. Le mélangeur décrit dans ce document est formé de plusieurs structures à lobes en forme de secteurs fabriquées séparément en CMC et assemblées et est muni en outre d'un anneau raidisseur interne.

### But et résumé de l'invention

L'invention a pour but de proposer un procédé particulier permettant d'obtenir une structure à lobes en CMC non développable constituant un secteur de mélangeur à lobes, pour former un mélangeur complet par assemblage de plusieurs secteurs, ou même constituant un mélangeur à lobes en CMC en une seule pièce, c'est-à-dire non obtenu par assemblage de plusieurs secteurs en CMC.

Ce but est atteint grâce à un procédé de fabrication d'une structure à lobes de mélangeur de flux de turbine à gaz ayant une partie amont annulaire prolongée vers l'aval par une partie formant jupe multilobée ayant une pluralité de lobes répartis autour d'un axe longitudinal de la structure à lobes, le procédé comprenant :
- la réalisation d'une préforme fibreuse en fibres réfractaires ayant une forme correspondant à celle de la structure à lobes à fabriquer, à partir de plusieurs éléments constitutifs en texture fibreuse qui sont assemblés entre eux et mis en forme au moyen d'un outillage de forme correspondant à celle de la structure à lobes à fabriquer pour obtenir une préforme fibreuse assemblée avec une première partie de préforme correspondant à la partie annulaire de la structure à lobes et une deuxième partie de préforme correspondant à la jupe multilobée de la structure à lobes, l'assemblage des éléments constitutifs de la préforme fibreuse étant au moins en partie réalisé le long de lignes de liaison qui s'étendent sensiblement dans le sens d'écoulement du flux au niveau de lobes de la partie de préforme de jupe multilobée, et
- la densification de la préforme fibreuse mise en forme et assemblée, par une matrice au moins en partie en céramique.

Par partie annulaire, on entend ici un secteur d'un anneau (l'axe longitudinal étant celui de l'anneau) ou un anneau complet. De même, par jupe multilobée on entend ici un secteur de jupe multilobée complète ou une jupe multilobée complète.

Ainsi, la préforme fibreuse et la structure à lobes obtenue par densification de la préforme peuvent avoir une forme correspondant à un secteur d'un mélangeur à réaliser, ce dernier étant obtenu par assemblage de plusieurs structures à lobes autour de l'axe du mélangeur.

En variante, la préforme fibreuse peut avoir une forme correspondant à celle d'un mélangeur complet à réaliser et le mélangeur est obtenu après densification de la préforme sans nécessiter l'assemblage de secteurs.

L'invention est remarquable notamment en ce que les pertes de charges aérodynamiques sont limitées en minimisant les perturbations de l'écoulement du flux gazeux dans le mélangeur par l'assemblage des éléments constitutifs de la préforme au niveau des lobes le long de lignes s'étendant dans le sens de cet écoulement et par la réalisation d'une structure à lobes en une seule pièce par densification d'une préforme assemblée, en dépit d'une forme non développable.

L'assemblage des éléments constitutifs de la préforme fibreuse le long des lignes de liaison peut être réalisé par couture ou par implantation de fils ou aiguilles.

Les lignes de liaison peuvent s'étendre de préférence sur les flancs des lobes ou le long de leurs sommets externes.

L'assemblage des éléments constitutifs de la préforme fibreuse peut être réalisé avec recouvrement de bords adjacents de ceux-ci ou par l'intermédiaire de bandes d'assemblage recouvrant les bords adjacents de ceux-ci.

Les éléments constitutifs pourront alors être éventuellement réalisés avec une épaisseur réduite dans les zones en recouvrement de leurs bords adjacents afin d'éviter la présence de surépaisseurs notables susceptibles de perturber l'écoulement du flux gazeux.

Les éléments en texture fibreuse constitutifs de la préforme fibreuse peuvent être réalisés par tissage tridimensionnel ou tissage multicouche, ce qui leur confère une bonne résistance au délaminage.

Avantageusement, les éléments en texture fibreuse constitutifs de la préforme fibreuse sont en fibres en céramique, notamment en fibres en carbure de silicium (SiC). On confère ainsi au matériau CMC obtenu après densification par la matrice céramique une raideur élevée, ce qui évite la nécessité de prévoir un anneau raidisseur au niveau des lobes, la présence d'un tel anneau étant pénalisante du point de vue aérodynamique.

Selon un mode de réalisation, le procédé comprend :
- la réalisation d'un élément en texture fibreuse en forme de bande,
- la réalisation d'incisions à travers la bande, les incisions s'étendant depuis un côté de la bande, sensiblement perpendiculairement à ce côté et sur une distance inférieure à la largeur de la bande,
- la découpe d'éléments en forme de secteurs dans une texture fibreuse,
- l'assemblage de chaque secteur avec la bande par liaison entre les bords du secteur et les bords d'une incision respective de la bande, chaque secteur étant ainsi inséré entre les bords d'une incision.

L'élément en forme de bande peut être réalisé par tissage tridimensionnel avec une épaisseur dans sa partie non incisée supérieure à son épaisseur dans sa partie incisée. On obtient ainsi directement une première partie de préforme correspondant à la partie annulaire de la structure à lobes avec une épaisseur supérieure à celle de la deuxième partie de préforme correspondant à la jupe multilobée.

En variante, la première partie de préforme peut être obtenue en superposant à l'élément en forme de bande au moins une strate annulaire supplémentaire en texture fibreuse. La strate annulaire supplémentaire peut alors recouvrir des zones de départ des lobes de la partie de préforme correspondant à la jupe multilobée, au niveau des fonds des incisions formées dans l'élément en forme de bande, afin de renforcer ces zones de départ des lobes.

Selon un autre mode de réalisation, le procédé comprend :
- la réalisation d'une pluralité d'éléments en texture fibreuse comprenant chacun un secteur d'au moins une première strate annulaire constitutive de la première partie de préforme correspondant à la partie annulaire de la structure à lobes et un secteur de la deuxième partie de préforme correspondant à la jupe multilobée, et
- l'assemblage des éléments au moins le long de bords adjacents des secteurs de la deuxième partie de préforme correspondant à la jupe multilobée.

Pour former la première partie de préforme correspondant à la partie annulaire de la structure à lobes, on peut ajouter au moins une strate annulaire supplémentaire en texture fibreuse couvrant au moins les secteurs de la première strate annulaire. Une strate annulaire supplémentaire peut alors recouvrir les zones de départs des lobes de la deuxième partie de préforme correspondant à la jupe multilobée, de manière à renforcer ces zones de départs des lobes.

L'invention vise aussi un mélangeur de flux en CMC de turbine à gaz qui est obtenu par assemblage de plusieurs secteurs formant des structures à lobes fabriquées par le procédé défini ci-avant, ou qui est formé directement par une structure à lobes fabriquée par un tel procédé.

L'invention vise encore un moteur aéronautique à turbine à gaz à double flux équipé d'un tel mélangeur en CMC.

### Brève description des dessins

- la figure 1 est une vue en perspective d'un mélangeur à lobes tel qu'il peut être obtenu par un procédé selon l'invention ;
- la figure 2 est une vue partielle en coupe montrant schématiquement un mode de montage du mélangeur de la figure 1 ;
- les figures 3 à 5 sont des vues schématiques en perspective d'éléments d'outillage utilisables pour la mise en oeuvre d'un procédé conforme à l'invention ;
- la figure 6 est une vue partielle d'un élément en forme de bande avec incisions formant un élément constitutif de préforme fibreuse de structure à lobes selon un premier mode de réalisation de l'invention ;
- les figures 7 et 8 sont des vues en coupe selon les plans VII-VII et VIII-VIII de la figure 6 ;
- la figure 9 est une vue partielle montrant une texture fibreuse dans laquelle peuvent être découpés des éléments en forme de secteurs formant des éléments constitutifs d'une préforme fibreuse de structure à lobes selon le premier mode de réalisation de l'invention ;
- la figure 10 est une vue partielle en coupe selon le plan X-X de la figure 9 ;
- la figure 11 est une vue schématique partielle montrant l'assemblage de l'élément en forme de bande de la figure 5 avec des éléments en forme de secteurs découpés dans la texture fibreuse de la figure 8, selon le premier mode de réalisation de l'invention ;
- la figure 12 est une vue de détail en coupe à échelle agrandie montrant l'assemblage avec recouvrement entre bords adjacents d'un élément en forme de secteur et d'une incision de l'élément en forme de bande selon le premier mode de réalisation de l'invention ;
- les figures 13 à 15 montrent des armures pour le tissage tridimensionnel des éléments constitutifs de la préforme fibreuse de structure à lobes ;
- la figure 16 est une vue de détail en coupe à échelle agrandie montrant l'assemblage entre bords adjacents d'un élément en forme de secteur et d'une incision de l'élément en forme de bande, utilisant une bande d'assemblage selon une variante du premier mode de réalisation de l'invention ;
- la figure 17 est une vue schématique partielle en perspective montrant l'application avec conformation sur un élément d'outillage de la figure 3 d'une préforme fibreuse de structure à lobes formée par assemblage d'éléments constitutifs selon le premier mode de réalisation de l'invention ;
- la figure 18 est une vue schématique partielle en perspective montrant l'utilisation d'une strate annulaire supplémentaire en texture fibreuse pour la partie de préforme correspondant à la partie annulaire de la structure à lobes ;
- les figures 19 et 20 sont des vues partielles en coupe selon les plans XIX-XIX et XX-XX de la figure 18 ;
- la figure 21 est une vue d'un élément constitutif de préforme fibreuse de structure à lobes selon un deuxième mode de réalisation de l'invention ;
- la figure 22 est une vue partielle en coupe selon le plan XXII-XXII de la figure 21 ;
- la figure 23 est une vue schématique partielle montrant l'assemblage d'éléments formant secteurs tels que celui de la figure 21, selon le deuxième mode de réalisation de l'invention ;
- la figure 24 est une vue de détail en coupe à échelle agrandie montrant l'assemblage avec recouvrement entre bords adjacents d'éléments formant secteurs selon le deuxième mode de réalisation de l'invention ;
- la figure 25 est une vue de détail en coupe à échelle agrandie montrant l'assemblage entre bords adjacents d'éléments en forme de secteurs, utilisant une bande d'assemblage, selon une variante du deuxième mode de réalisation de l'invention ;
- la figure 26 est une vue schématique partielle en perspective montrant l'application avec conformation sur un élément d'outillage de la figure 4 d'une préforme fibreuse de structure à lobes formée par assemblage d'éléments constitutifs selon le deuxième mode de réalisation de l'invention ;
- les figures 27 et 28 sont des vues partielles en coupe selon les plans XXVII-XXVII et XXVIII-XXVIII de la figure 26 montrant notamment des strates fibreuses supplémentaires utilisées pour la partie de préforme correspondant à la partie annulaire de la structure à lobes ;
- la figure 29 est une vue schématique en perspective d'une structure à lobes telle qu'obtenue selon le premier ou deuxième mode de réalisation de l'invention ; et
- la figure 30 est une vue schématique en perspective d'une structure à lobes telle qu'obtenue selon encore un autre mode de réalisation de l'invention.

### Description détaillée de modes de réalisation

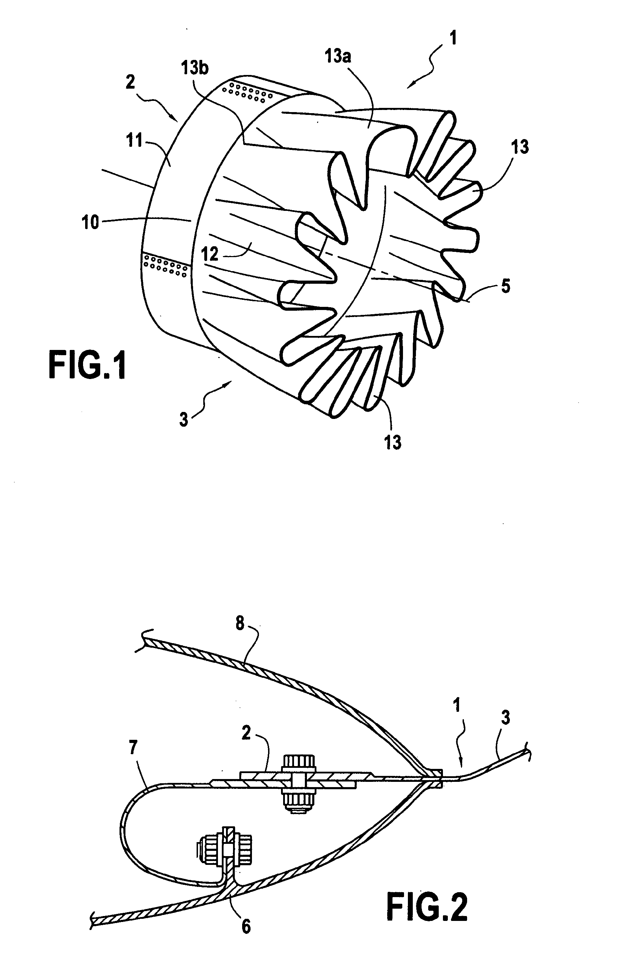

La figure 1 montre un mélangeur de flux à lobes pour moteur aéronautique à turbine à gaz tel qu'il peut être obtenu par un procédé selon l'invention.

La forme générale d'un tel mélangeur est connue en elle-même. Le mélangeur comprend une partie 2 en forme d'anneau prolongée vers l'aval par une partie 3 formant structure ou jupe multilobée complète comprenant une pluralité de lobes 13 répartis circonférentiellement tout autour d'un axe longitudinal 5 du mélangeur. Les termes "amont" et "aval" sont ici utilisés par référence à la direction générale d'écoulement de flux gazeux dans le mélangeur. Les lobes 13 sont de formes semblables à l'exception éventuellement de l'un d'entre eux 13a situé dans une zone de liaison du moteur avec un mât de support et ayant un sommet externe élargi et aplati.

Dans le cadre de la présente invention, le mélangeur 1 est réalisé en matériau CMC, ce terme couvrant ici les matériaux comprenant un renfort fibreux en fibres réfractaires (carbone ou céramique) densifié par une matrice au moins partiellement en céramique, au moins une phase externe de la matrice étant en céramique, étant donné que les composés de type oxydes réfractaires sont ici rangés sous la dénomination céramique. Des exemples typiques de tels matériaux CMC sont les matériaux C/SiC (renfort en fibres de carbone et matrice en carbure de silicium), les matériaux SiC/SiC (fibres de renfort et matrice en SiC) et les matériaux C/C-SiC (renfort en fibres de carbone et matrice mixte en carbone (au plus près des fibres) et SiC. Une couche d'interphase, par exemple en carbone pyrolytique (PyC) ou en nitrure de bore (BN), peut être interposée entre les fibres et la matrice. Dans le cadre de la présente invention, on utilise de préférence des fibres SiC pour la formation du renfort fibreux, les fibres SiC pouvant être préalablement munies d'un revêtement d'interphase en PyC.

Comme illustré par la figure 2, le mélangeur 1 est supporté par liaison avec une virole métallique interne 6 au moyen de pattes de liaison métalliques 7. A une extrémité, les pattes de liaison sont fixées par boulonnage sur une bride formée intégralement avec la virole interne 6. A leur autre extrémité, les pattes de liaison 7 sont fixées par boulonnage sur l'anneau 2 du mélangeur. Les pattes de liaison 7 ont une forme recourbée pour présenter une capacité de déformation élastique permettant d'accommoder des dilatations différentielles d'origine thermique entre le mélangeur en matériau CMC et la virole métallique interne 6. D'autres pattes de liaison (non représentées) élastiquement déformables alternant avec les pattes de liaison 7 relient la virole interne 6 à une virole externe 8. Les viroles 6 et 8 permettent de supporter le mélangeur 1 dans un carter d'une zone d'échappement de tuyère à gaz. Un tel montage est décrit dans le document WO2006/035186 déjà cité.

Dans l'exemple illustré, le mélangeur 1 est formé par assemblage de plusieurs secteurs 10 en CMC, ici au nombre de 3. Les secteurs peuvent s'étendre sur des angles sensiblement égaux. Chaque secteur 10 forme une structure à lobes avec une partie annulaire 11 formant un secteur de l'anneau 2 du mélangeur et une jupe multilobée 12 comprenant plusieurs lobes 13 et formant un secteur de la jupe multilobée 3 du mélangeur. Les secteurs 10 sont assemblés le long de leurs bords adjacents par exemple par boulonnage ou rivetage.

Selon une caractéristique du procédé de l'invention, la préforme fibreuse constituant le renfort d'une structure à lobes 10 en CMC est réalisée à partir d'éléments constitutifs de la préforme en texture fibreuse, lesquels éléments sont assemblés entre eux et conformés sur un élément d'outillage pour constituer une préforme complète de structure à lobes.

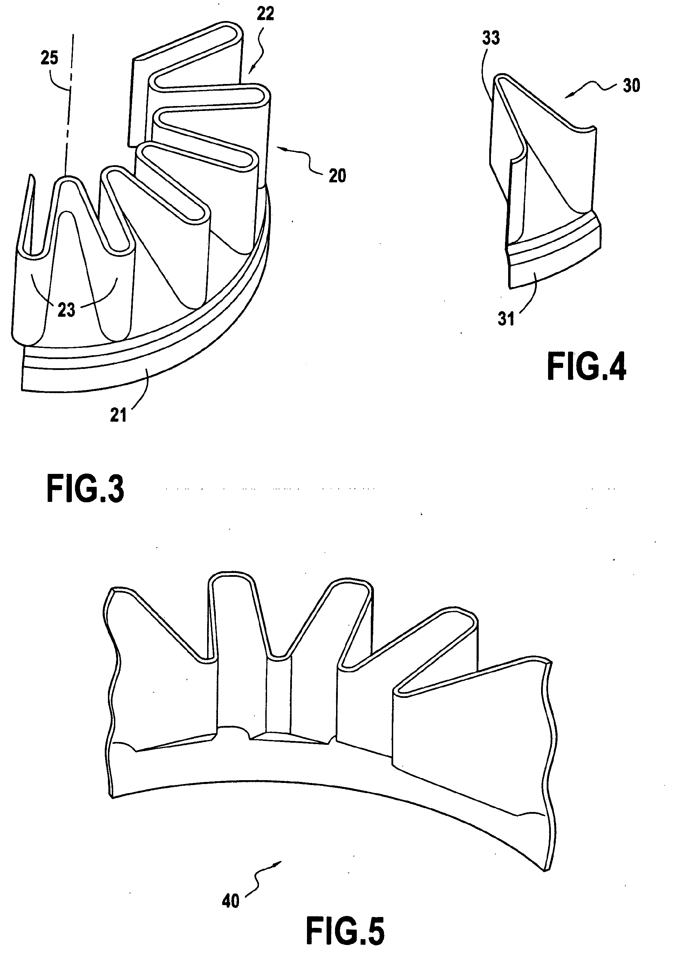

Un tel élément d'outillage, ou forme 20 ayant une forme correspondant à celle de la structure à lobes 10 à fabriquer est illustré par la figure 3. Il comprend une partie annulaire 21, correspondant à la partie annulaire 11 de la structure à lobes et une partie multilobée 22 correspondant à la jupe multilobée 12 de la structure à lobes, avec plusieurs lobes 23 répartis sur une partie de circonférence autour d'un axe 25 et correspondant aux lobes 13 de la structure à lobes.

Des éléments de conformation sont en outre prévus permettant de conformer la préforme fibreuse en lui faisant épouser le relief de la forme 20 lors de la mise en forme de la préforme ou lors de sa consolidation par densification partielle.

Ainsi, une clé de conformation 30 est montrée sur la figure 4. Elle présente une partie 31 en forme de virole et une partie en saillie 33 de forme correspondant à celle d'un lobe 23 de l'outillage 20 pour pouvoir s'engager entre les sommets externes de deux lobes 23 voisins en conformant une texture fibreuse (non représentée) enserrée entre plusieurs clés 30 et la forme 20. Dans le cas où les lobes de la structure à lobes à fabriquer ont des formes différentes, des clés de formes différentes correspondantes sont utilisées. Dans l'exemple illustré, une clé 30 couvre un secteur correspondant à un pas entre lobes 23 en direction circonférentielle. Des clés couvrant un secteur de dimension supérieure pourront aussi être utilisées si la géométrie de la structure multilobée 22 le permet.

Quant à la figure 5, elle montre une membrane souple 40 relativement épaisse, par exemple en élastomère, ayant une forme correspondant à celle de la structure à lobes à fabriquer. L'utilisation des clés 30 et de la membrane 40 sera décrite en détail plus loin.

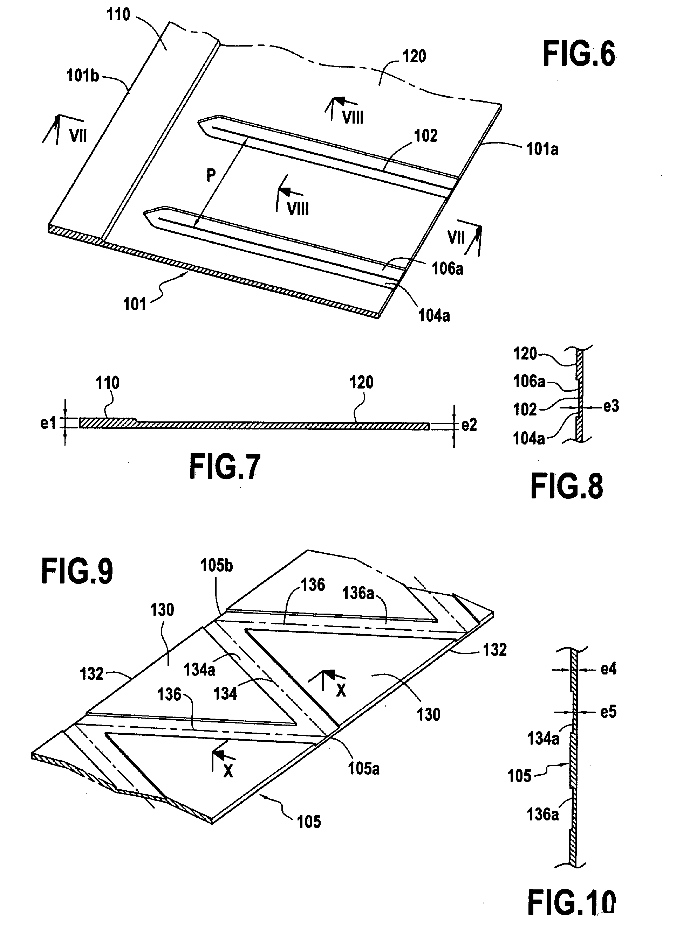

L'obtention d'une préforme fibreuse d'une structure à lobes 10, selon un premier mode de réalisation de l'invention, sera maintenant décrite en référence aux figures 6 à 12.

Une bande en texture fibreuse 101 est réalisée et des découpes ou incisions 102 sont formées à travers toute l'épaisseur de la bande à partir d'un bord longitudinal 101a de la bande en direction sensiblement perpendiculaire au bord 101a. Les incisions 102 ont mêmes longueurs et s'étendent sur une partie seulement de la largeur de la bande 101 laissant une zone 110 non incisée le long du bord 101b opposé au bord 101a. Le pas p entre incisions correspond au pas circonférentiel entre les emplacements de naissance ou départ des lobes de la préforme due structure à lobes à réaliser, c'est-à-dire correspond au pas entre les emplacements de départ 13b (figure 1) des lobes 13 de la structure à lobes à fabriquer.

La zone 110 de la bande 101 est destinée à former une première partie de préforme de structure à lobes correspondant à la partie annulaire 11, sensiblement jusqu'au raccordement avec les lobes 13. Comme illustré par la figure 7, on pourra conférer à la zone 110, au moins sur une partie de sa largeur à partir du bord 101b, une épaisseur e1 supérieure à l'épaisseur e2 du reste 120 de la bande 101 afin d'avoir une épaisseur supérieure au niveau de l'anneau 2 par lequel le mélangeur est monté.

Comme illustré par la figure 8, dans la zone 120 de la bande 101 destinée à former une deuxième partie de préforme de structure à lobes correspondant à la jupe multilobée 12, on pourra avoir une épaisseur réduite e3 par rapport à l'épaisseur e2, dans des zones marginales 104a, 106a, le long des bords des incisions 102. Un assemblage avec d'autres éléments constitutifs de la préforme fibreuse de la structure à lobes pourra ainsi être réalisé avec recouvrement au niveau des zones marginales 104a, 106a sans engendrer de surépaisseurs notables, ainsi que décrit plus loin de façon plus détaillée.

Les autres éléments constitutifs de la préforme fibreuse de structure à lobes, avec la bande 101, sont des éléments 130 en forme de secteurs qui peuvent avantageusement être obtenus par découpe dans une bande de texture fibreuse telle que la bande 105 de la figure 9.

Sur la figure 9, les traits mixtes indiquent les lignes de découpe des éléments 130. Les éléments 130 ont une forme générale sensiblement triangulaire avec une base 132 et deux bords 134, 136, les bases 132 des éléments 130 s'étendant alternativement sur un côté 105a de la bande 105 et sur le côté opposé 105b. Comme le montre la figure 10, la bande 105 présente une épaisseur e4 sensiblement égale à l'épaisseur e2 de la zone 120 de la bande 101, à l'exception de zones marginales 134a, 136a d'épaisseur réduite e5 le long des bords 134, 136 des éléments 130. Les zones marginales 134a, 136a ont une largeur sensiblement égale à celle des zones marginales 104a, 106a.

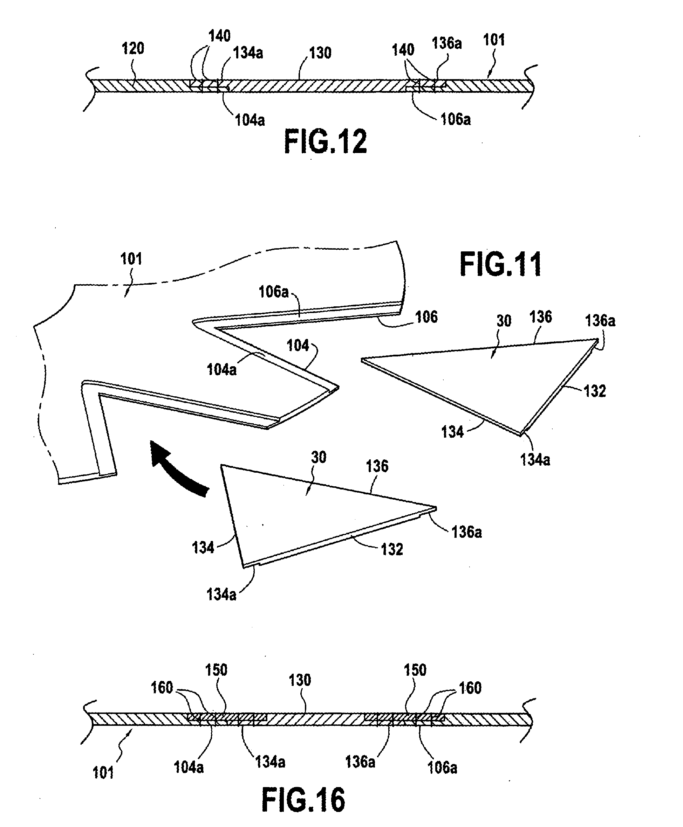

L'assemblage des éléments 130 formant secteurs avec la bande 101 est réalisé en ouvrant les incisions 102 par écartement de leurs bords 104, 106 pour insérer les éléments 130 découpés dans la bande 105, comme montré par la figure 11. Les zones marginales 104a et 134a viennent en recouvrement mutuel, de même que les zones marginales 106aet 136a. La largeur de la bande 105 est choisie pour que les éléments 130 occupent l'espace entre les bords 104, 106 des incisions 102, sur toute la longueur de ces bords, et l'on utilise autant d'éléments 130 qu'il y a d'incisions 102, chaque élément 130 étant inséré entre les bords d'une incision respective.

La figure 12 montre le recouvrement de zones marginales 104a, 106a avec des zones marginales 134a, 136a, respectivement. Les épaisseurs e3 et e5 sont choisies, par exemple égales entre elles, de sorte que leur somme soit sensiblement égale aux épaisseurs e2 et e4 pour ne pas engendrer de surépaisseurs notables. La liaison entre les éléments 130 et la bande 101 est réalisée avantageusement par couture de leurs zones marginales superposées, au moyen d'un fil de couture 140. La couture peut être réalisée par point noué ou par point de chaînette. D'autres modes de liaison peuvent être envisagés, tels que implantation de fils, comme décrit par exemple dans le document US 4 628 846, ou implantation d'aiguilles ou épingles, comme décrit dans le document WO97/06948, ou encore collage, la liaison étant complétée par co-densification des éléments constitutifs de la préforme fibreuse après leur assemblage.

Les bandes 101 et 105 sont réalisées avantageusement par tissage tridimensionnel de type interlock avec épaisseur variable.

De préférence, comme déjà indiqué, la préforme fibreuse est réalisée en fibres en céramique, notamment en fibres SiC. Le tissage pourra alors être effectué avec un fil commercialisé par la société japonaise Ube Industries Ltd. sous la dénomination "Tyranno ZMI" ou un fil commercialisé par la société japonaise Nippon Carbon sous la dénomination "Nicalon". Afin de faciliter le tissage et éviter une détérioration du fil lors du tissage, un guipage par un fil en un matériau susceptible d'être éliminé ultérieurement sans affecter le fil en SiC pourra être réalisé, par exemple un guipage par un fil en alcool polyvinylique (PVA) éliminable par mise en solution dans de l'eau.

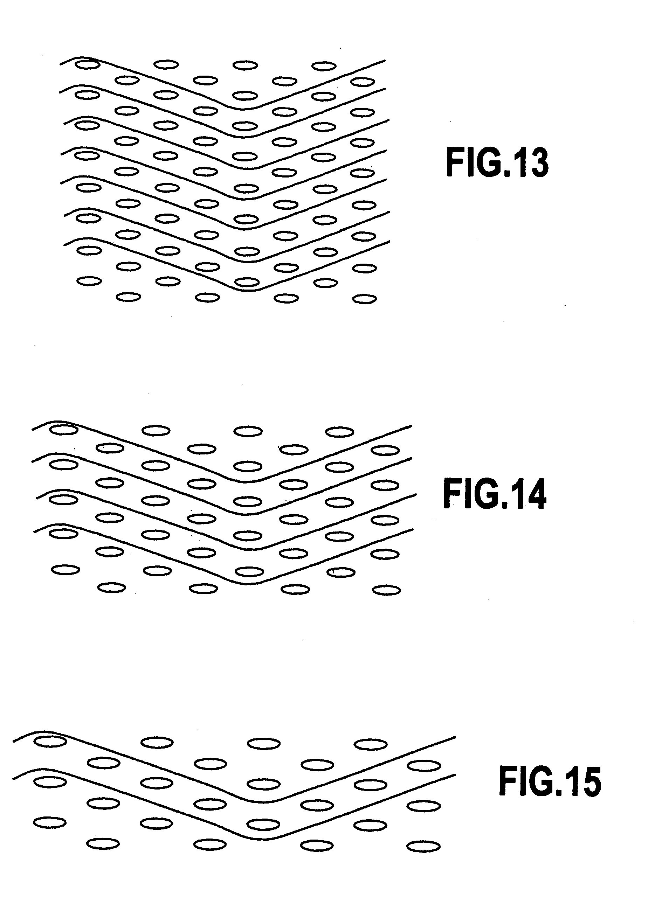

Les figures 13 à 15 montrent les armures de base utilisées avec un tel fil pour obtenir respectivement des tissus d'épaisseurs e1 = 3 mm environ, e2 = e4 = 1,5 mm environ et e3 = e5 = 0,75 mm environ, les fils de trame étant en coupe.

Un tissage tridimensionnel avec armure de type interlock est un tissage dans lequel chaque fil de chaîne relie entre elles plusieurs couches de fils de trame, les trajets des fils de chaîne étant identiques.

Le passage d'une épaisseur à une autre peut être réalisé de façon progressive avec enlèvement ou ajout de couches de fils de chaîne et de trame.

D'autres modes de tissage tridimensionnel peuvent être utilisés, par exemple des tissages multicouche avec armures de type multi-toile, multi-satin ou multi-sergé. De telles armures utilisables pour le tissage de textures fibreuses d'épaisseur évolutive sont décrites notamment dans le document PCT FR2006/050617.

Dans le cas où les fibres de la texture fibreuse sont en céramique, notamment en SiC, le fil de couture 140 peut être également en SiC, par exemple identique à celui utilisé pour la réalisation de la texture fibreuse. On pourrait tout aussi bien utiliser un fil de couture en carbone.

La figure 16 illustre une variante de réalisation selon laquelle l'assemblage des éléments 130 avec la bande 101 est effectué au moyen de bandes d'assemblage 150 qui recouvrent les zones marginales 104a, 134a et 106a, 136a, celles-ci étant disposées bord à bord et non superposées. Les bandes 150 sont découpées dans une texture fibreuse obtenue par exemple par tissage tridimensionnel et de même nature que la texture fibreuse de la bande 101 et des éléments 130. L'épaisseur des bandes d'assemblage est choisie pour ne pas engendrer de surépaisseurs notables. La liaison entre la bande 101 et les éléments 130 est réalisée par exemple par couture des bandes d'assemblage 150 sur les zones marginales 104a, 134a et 106a, 136a au moyen de fil de couture 160.

Après assemblage de la bande 101 avec les éléments 130, l'ensemble est conformé sur la forme 20 pour obtenir la préforme fibreuse désirée pour la structure à lobes à fabriquer. La zone 110 de la bande 101 est appliquée sur la partie annulaire 21 puis l'ensemble formé par la zone 120 de la bande 101 et les éléments 130 formant secteurs est appliqué sur la partie multilobée 22 de la forme 20 pour obtenir une partie préforme fibreuse correspondant à la jupe multilobée 12 de la structure à lobes. La conformation de la préforme fibreuse pourra être réalisée avec l'assistance de clés de conformation 30 (figure 4) et/ou de la membrane 40 (figure 5).

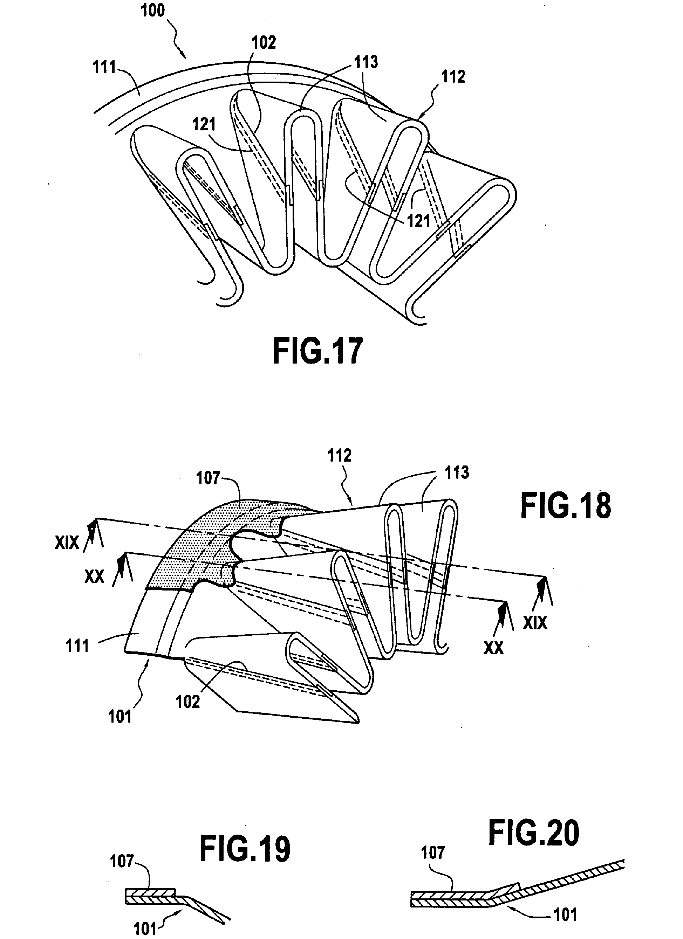

La figure 17 montre partiellement la préforme fibreuse 100 de structure à lobes ainsi obtenue. La préforme 100 comprend une partie de préforme annulaire 111 correspondant à la partie annulaire 11 de la structure à lobes et formée par la conformation de la zone 110 de la bande 101 sur la partie annulaire 21 de la forme 20, et une partie 112 de préforme multilobée correspondant à la jupe multilobée 12 de la structure à lobes et formée par conformation sur la partie 22 de la forme 20.

Dans l'exemple représenté par la figure 17, la préforme fibreuse 100 a été disposée sur la forme 20 de telle manière que les lignes de liaison 121 entre éléments constitutifs de la préforme (c'est-à-dire les zones marginales cousues le long des bords des incisions formées dans la bande 21) s'étendant le long des flancs des lobes 113 de la partie de préforme 112. Une telle disposition présente un avantage car, dans le mélangeur produit par assemblage de structures à lobes obtenues après densification de préformes 100, ces lignes de liaison se trouvent dans des zones du mélangeur les moins sollicitées mécaniquement.

En variante, les lignes de liaison entre éléments constitutifs de la préforme pourraient être disposées le long des sommets externes des lobes 113. Une telle disposition présente aussi un avantage car, dans le mélangeur finalement obtenu, les lignes de liaison se trouvent alors dans des zones du mélangeur exposées aux températures les moins élevées.

Dans un cas comme dans l'autre, les lignes de liaison s'étendent sensiblement dans le sens de l'écoulement du flux gazeux dans le mélangeur finalement obtenu de sorte que d'éventuelles irrégularités de surface induites par la présence des lignes de liaison ne peuvent perturber de façon significative l'écoulement de ce flux gazeux.

Les dimensions de la bande 101 et des éléments 130 formant secteurs sont bien entendu choisies pour obtenir une préforme 100 de forme correspondant à celle de la structure à lobes à fabriquer, compte étant éventuellement tenu d'un usinage éventuel final après densification de la préforme. Ainsi, la longueur de la bande 101 est choisie en fonction de la circonférence désirée pour la partie de préforme 111 tandis que la largeur de la bande 101 est choisie en fonction de la dimension voulue de la préforme 100 en direction axiale après formation des lobes 113. En outre, les longueurs des côtés de base 132 des éléments 130 formant secteurs sont choisies pour compléter la longueur de la bande 101 afin d'obtenir une longueur totale correspondant à la développée de la courbe formée par le bord d'extrémité aval de la partie de préforme 112.

La figure 18 montre une variante de réalisation selon laquelle la bande 101 présente une épaisseur dans la partie de préforme 111 égale à celle de la partie de préforme 112 (hormis les zones marginales des incisions 102 qui ont une épaisseur réduite).

Le renforcement de l'épaisseur de la partie de préforme correspondant à la partie annulaire de la structure à lobes peut être assuré alors par ajout d'une strate fibreuse supplémentaire 107, par exemple de même nature que la bande 101. Comme le montrent les figures 19 et 20, la strate 107 a une largeur variable entre une première valeur correspondant sensiblement à celle de la zone 110, et une deuxième valeur supérieure de la première aux niveaux des incisions 102, de manière à recouvrir et renforcer les zones de naissance (ou de départ) des lobes 113 qui se situent aux niveaux des incisions 102.

La strate fibreuse supplémentaire 107 peut être liée à la bande 101 de la même manière que les éléments 130 par exemple par quelques points de couture, par implantation d'aiguilles ou épingles, ou encore par collage.

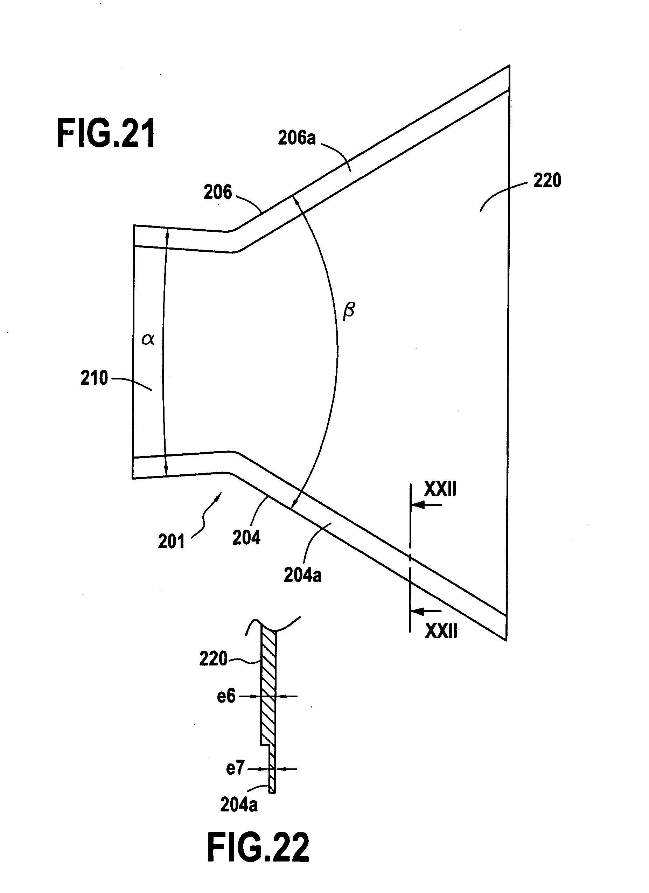

Un deuxième mode de réalisation de l'invention sera maintenant décrit en référence aux figures 21 à 26.

Selon ce deuxième mode de réalisation, la préforme fibreuse de structure à lobes est réalisée par assemblage et mise en forme d'une pluralité d'éléments constitutifs comprenant chacun un secteur d'au moins une strate constitutive d'une première partie de préforme correspondant à la partie annulaire de la structure à lobes et un secteur d'une deuxième partie de préforme correspondant à la jupe multilobée de la structure à lobes.

La figure 21 illustre schématiquement un tel élément constitutif 201 réalisé en une seule pièce de texture fibreuse avec deux parties 210 et 220 formant secteurs, la partie 220 s'étendant sur un angle β plus grand que l'angle α sur lequel s'étend la partie 210.

L'élément 201 présente une épaisseur constante e6 à l'exception de zones marginales 204a, 206a d'épaisseur réduite e7 le long de ses bords longitudinaux 204, 206, comme le montre la figure 22.

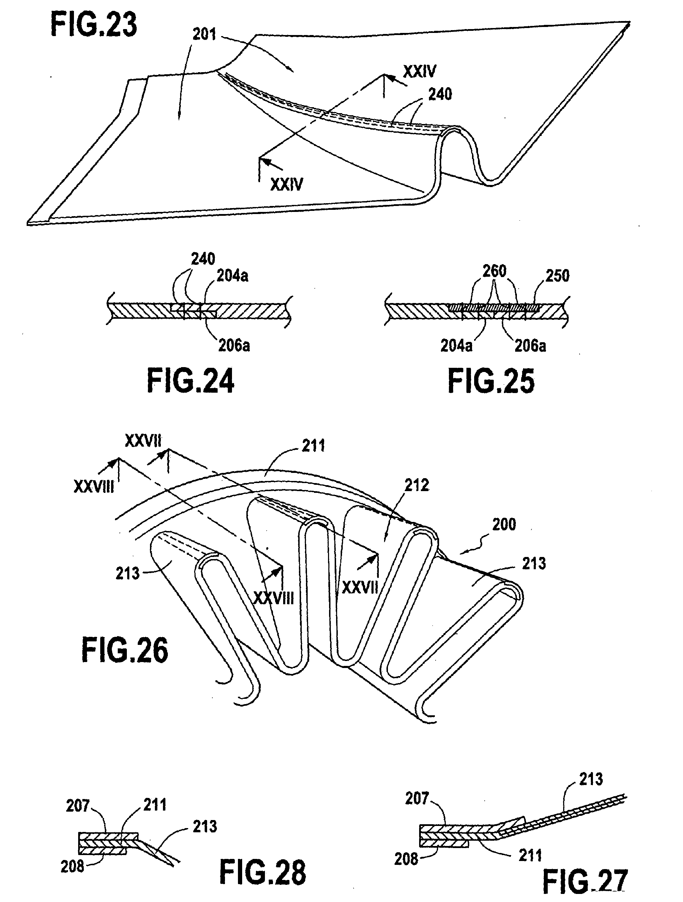

Plusieurs éléments 201 en forme de secteurs sont assemblés avec recouvrement mutuel des zones marginales s'étendant le long de leurs bords adjacents, ainsi que montré schématiquement par les figures 23 et 24. Les éléments 201 assemblés sont liés les uns aux autres par exemple par couture le long des zones marginales en recouvrement mutuel, en utilisant un fil de couture 240 éventuellement de même nature que la texture fibreuse constituant les éléments 201. D'autres modes d'assemblage, notamment implantation d'aiguilles ou épingles ou collage pourraient être utilisés. L'épaisseur e7 peut être choisie sensiblement égale à la moitié de l'épaisseur e6 pour ne pas engendrer de surépaisseur notable au niveau des recouvrements mutuels des zones marginales 204a, 206a.

On obtient alors un ensemble fibreux en forme générale de secteur de couronne avec une partie annulaire formée par la réunion des parties 210 formant secteurs d'anneau et une partie plissée (non développable) formée par la réunion des secteurs 220.

Les éléments 201 constitutifs de la préforme fibreuse peuvent être réalisés par tissage tridimensionnel, par exemple de type interlock, avec les zones marginales de plus faible épaisseur comme décrit plus haut à propos du premier mode de réalisation de l'invention. Pour la réalisation des éléments 201, on peut utiliser des fils de même nature que celle mentionnée plus haut également à propos du premier mode de réalisation.

La figure 25 illustre une variante de réalisation selon laquelle l'assemblage des éléments 201 entre eux est effectué au moyen de bandes d'assemblage 250 qui recouvrent les zones marginales 204a, 206a disposées non pas en recouvrement mutuel, mais bord à bord. Les bandes 250 sont découpées dans une texture fibreuse obtenue par exemple par tissage tridimensionnel et de même nature que la texture fibreuse des éléments 201. L'épaisseur des bandes d'assemblage 250 peut être choisie pour ne pas engendrer de surépaisseur notable. La liaison entre les éléments 201 et les bandes d'assemblage 250 est réalisée par exemple par couture des bandes d'assemblage 250 sur les zones marginales 204a, 206a au moyen de fil de couture 260. On pourrait aussi réaliser une liaison par implantation d'aiguilles ou épingles ou par collage.

Après assemblage et liaison mutuelle des éléments 201, l'ensemble est conformé sur la forme 20 pour obtenir la préforme désirée pour la structure à lobes à fabriquer. Les parties assemblées en forme de secteurs 210 sont appliquées sur la partie annulaire 21 de la forme 20 pour obtenir une strate constitutive de la partie de préforme 211 correspondant à la partie annulaire de la structure à lobes. Les parties assemblées en forme de secteurs 220 sont appliquées sur la partie multilobée 22 de la forme 20 éventuellement avec l'assistance des clés de conformation 30 ou de la membrane 40 pour obtenir une partie de préforme multilobée 212 correspondant à la jupe multilobée de la structure à lobes à fabriquer.

La figure 26 montre partiellement la préforme 200 de structure à lobes ainsi obtenue. Un renforcement de l'épaisseur de la partie de préforme 211 peut être assuré par ajout d'une strate fibreuse supplémentaire 207, par exemple de même nature que les éléments 201. Comme le montrent les figures 26 à 28, la strate 207 a une largeur variable entre une première valeur correspondant sensiblement à celle de la partie de préforme 210 et une deuxième largeur plus grande telle qu'elle s'étend jusqu'au niveau des zones de naissance (ou de départ) des lobes 213 de la préforme 200, afin de renforcer ces zones. Une autre strate supplémentaire 208 semblable à la strate 207 mais pouvant avoir une largeur constante correspondant à celle de la partie 210 peut être disposée de l'autre côté de la partie de préforme 211, la strate 208 étant disposée sur la partie annulaire 21 de la forme 20 avant application de l'ensemble des éléments 201 assemblés. Les strates 207 et 208 peuvent être liées aux parties 210 formant secteurs par exemple par des points de couture, implantation d'aiguilles ou épingles, ou collage.

On notera que les éléments 201 pourront être réalisés avec une épaisseur plus importante au niveau des secteurs 210, de manière à obtenir directement une partie de préforme annulaire 211 de plus forte épaisseur, sans nécessiter l'ajout de strates supplémentaires.

La préforme fibreuse 200 est disposée sur la forme 20 lors de sa conformation de manière que les lignes d'assemblage entre les parties 220 formant secteurs soient situées de préférence le long des flancs des lobes ou le long des sommets externes des lobes (comme sur la figure 26), pour les raisons indiquées plus haut à propos de la préforme 100.

Les dimensions des éléments 201 sont choisies pour obtenir une préforme 200 de structure à lobes de forme correspondant à celle de la structure à lobes à fabriquer, compte tenu, le cas échéant, d'un éventuel usinage final après densification de la préforme. En particulier, les parties 220 en forme de secteurs doivent s'étendre sur un angle β suffisamment grand pour permettre la formation des lobes 213 voulus.

Dans ce qui précède, on a envisagé de conférer une épaisseur réduite aux zones marginales des éléments constitutifs de la préforme fibreuse qui sont en recouvrement mutuel ou en recouvrement avec des bandes d'assemblage pour l'assemblage de la préforme. Cela n'est toutefois pas nécessaire, et l'on pourra ne pas réduire l'épaisseur des zones marginales en recouvrement dès lors que les surépaisseurs induites lors de l'assemblage des éléments constitutifs de la préforme n'affectent pas de façon significative le comportement aérodynamique du mélangeur finalement obtenu.

La préforme fibreuse 100 ou 200 peut être obtenue à partir d'éléments en texture fibreuse sèche (non pré-imprégnée) ou en texture fibreuse pré-imprégnée.

Dans le premier cas, avant densification de la préforme par une matrice au moins en partie en céramique, une étape préalable de consolidation de la préforme fibreuse par densification partielle par une matrice de consolidation peut être réalisée. Cette étape de consolidation peut consister à imprégner la préforme fibreuse par une composition liquide précurseur de céramique ou de carbone, par exemple une résine éventuellement diluée dans un solvant, puis à transformer le précurseur par traitement thermique après élimination du solvant éventuel et réticulation de la résine. Des précurseurs de SiC sont par exemple des résines de type polycarbosilane, polytitanocarbosilane, polysilazanes ou polysiloxanes tandis qu'un précurseur de carbone est par exemple une résine à taux de coke relativement élevé telle qu'une résine phénolique. Des processus de consolidation de préformes fibreuses sont décrits notamment dans les documents WO 2006/090087, FR 0654542 et US 5 846 379, incluant le cas échéant la formation d'un revêtement d'interphase entre fibres et matrice. Un tel revêtement d'interphase par exemple en carbone pyrolytique ou en nitrure de bore (BN) pourrait aussi être formé préalablement sur la texture fibreuse utilisée pour les éléments constitutifs de la préforme ou après assemblage de ces éléments. La formation du revêtement d'interphase peut alors être obtenue par infiltration chimique en phase gazeuse.

En vue de sa consolidation, la préforme fibreuse sèche 100 ou 200 est conformée sur la forme 20 constituant une partie de moule mâle au moyen par exemple des clés de conformation 30 constituant des éléments de moule femelle. Les clés de conformation sont retirées et la membrane 40 est mise en place. L'imprégnation de la préforme fibreuse par le précurseur liquide de la matrice de consolidation est réalisée. L'imprégnation de la préforme peut être assistée par mise sous vide de l'espace entre la forme 20 et la membrane 40, la membrane pouvant alors être recouverte par un film étanche.

Après séchage et réticulation de la résine, un traitement thermique de transformation par pyrolyse du précurseur résine en céramique ou carbone est réalisé et une préforme fibreuse consolidée partiellement densifiée par une matrice céramique ou carbone est obtenue. La préforme consolidée est fixée dans la forme voulue définie par la forme 20 et la membrane 40. L'utilisation de la membrane 40 en élastomère contribue à conférer un aspect de surface relativement lisse, atténuant des irrégularités telles que celles résultant des liaisons effectuées entre les éléments constitutifs de la préforme.

Dans le cas de l'utilisation d'une texture fibreuse pré-imprégnée, la pré-imprégnation peut être réalisée par une résine précurseur de céramique ou de carbone telle que celles mentionnées ci-avant, la résine pouvant être pré-polymérisée après élimination d'un solvant éventuel utilisé pour l'imprégnation.

La conformation de la préforme fibreuse obtenue par assemblage d'éléments en texture fibreuse pré-imprégnée est réalisée sur la forme 20 au moyen par exemple de la membrane 40. Le moulage de la préforme peut être assisté par application d'une pression différentielle et la résine est ensuite complètement réticulée.

Un traitement thermique de transformation par pyrolyse du précurseur résine en céramique ou en carbone est ensuite réalisé et une préforme fibreuse consolidée partiellement densifiée par une matrice céramique ou carbone est obtenue.

Dans les deux cas, la densification de la préforme consolidée est poursuivie par formation d'une matrice céramique par exemple par infiltration chimique en phase gazeuse ou CVI ("Chemical Vapor Infiltration").

La matrice céramique peut être une céramique réfractaire, telle que SiC, ou, avantageusement, une matrice céramique "auto-cicatrisante". Une matrice céramique "auto-cicatrisante" est obtenue en réalisant au moins une phase constitutive de la matrice en un matériau capable, par passage à l'état visqueux dans un certain domaine de températures, de combler ou "cicatriser" des fissures s'étant formées dans la matrice notamment sous l'effet de cyclages thermiques. Des compositions ayant des propriétés "auto-cicatrisantes" sont notamment des compositions vitreuses, par exemple de type aluminosilicate, ou des compositions capables, sous l'effet d'une oxydation, de former des compositions vitreuses. Des phases de matrice en carbure de bore B₄C ou en un système ternaire Si-B-C sont des précurseurs de compositions vitreuses.

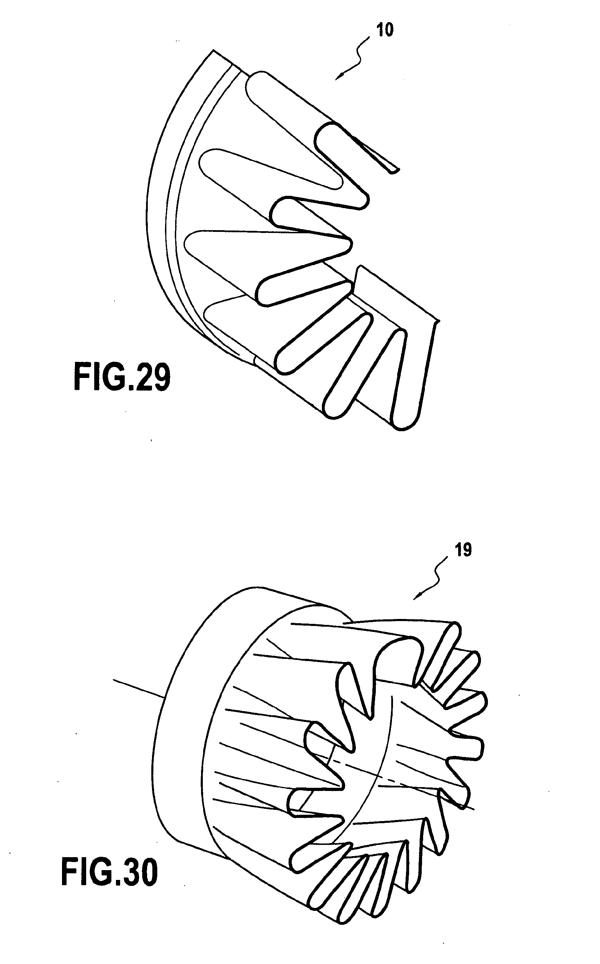

On obtient après densification par la matrice céramique une structure à lobes en CMC telle que la structure 10 de la figure 29, formant un secteur de mélangeur à lobes.

Dans le cas d'une préforme fibreuse sèche, on notera que la consolidation de la préforme peut être réalisée non pas par voie liquide (imprégnation par un précurseur liquide de la matrice de consolidation suivie de réticulation et pyrolyse), mais par CVI. On utilise alors des éléments d'outillage rigide, forme 20 et clés de conformation 30, qui, tout en maintenant la préforme fibreuse dans la forme voulue, sont avantageusement multi-perforés pour favoriser l'accès de la phase gazeuse à la préforme.

Dans l'exemple décrit, le mélangeur est obtenu par assemblage de trois secteurs. Bien entendu, le nombre de secteurs formant le mélangeur et constituant chacun une structure à lobes peut être différent de trois, les outillages servant à la réalisation des préformes étant adaptés aux formes des structures à lobes à réaliser.

On pourra aussi réaliser un mélangeur 19 en CMC en une seule pièce par densification d'une préforme fibreuse complète d'un mélangeur. Un tel mélangeur est représenté sur la figure 30. On utilisera alors pour la conformation de la préforme fibreuse une forme et une membrane ayant des formes correspondant à celle du mélangeur complet à obtenir. Dans le mode de réalisation des figures 6 à 12, les deux extrémités de la zone 120 de la bande de texture fibreuse 101 seront alors traitées comme des bords d'une incision et les deux extrémités de la zone 110 de la bande de texture fibreuse 101 seront assemblées par leurs zones marginales, de la même manière que pour l'assemblage des éléments constitutifs de la préforme, pour former un anneau complet.

Ainsi, dans la description et les revendications, l'expression "structure à lobes" doit être comprise comme désignant un mélangeur à lobes complet ou un secteur seulement d'un tel mélangeur.

## Revendications

1. Procédé de fabrication d'une structure à lobes de mélangeur de flux de turbine à gaz ayant une partie amont annulaire prolongée vers l'aval par une partie formant jupe multilobée ayant une pluralité de lobes répartis autour d'un axe longitudinal de la structure à lobes, le procédé comprenant :
- la réalisation d'une préforme fibreuse en fibres réfractaires ayant une forme correspondant à celle de la structure à lobes à fabriquer, à partir de plusieurs éléments constitutifs en texture fibreuse qui sont assemblés entre eux et mis en forme au moyen d'un outillage de forme correspondant à celle de la structure à lobes à fabriquer pour obtenir une préforme fibreuse assemblée avec une première partie de préforme correspondant à la partie annulaire de la structure à lobes et une deuxième partie de préforme correspondant à la jupe multilobée de la structure à lobes, l'assemblage des éléments constitutifs de la préforme fibreuse étant au moins en partie réalisé le long de lignes de liaison qui s'étendent sensiblement dans le sens d'écoulement du flux au niveau de lobes de la partie de préforme de jupe multilobée, et
- la densification de la préforme fibreuse mise en forme et assemblée, par une matrice au moins en partie en céramique.

2. Procédé selon la revendication 1, dans lequel l'assemblage des éléments constitutifs de la préforme est réalisé par couture ou par implantation de fils, aiguilles ou épingles.

3. Procédé selon l'une quelconque des revendications 1 et 2, dans lequel l'assemblage des éléments constitutifs de la préforme est réalisé le long de lignes de liaison qui s'étendent sur les flancs ou les sommets externes de lobes de la deuxième partie de préforme correspondant à la jupe multilobée.

4. Procédé selon l'une quelconque des revendications 1 à 3, dans lequel l'assemblage des éléments constitutifs de la préforme est réalisé avec recouvrement de bords adjacents de ceux-ci.

5. Procédé selon l'une quelconque des revendications 1 à 3, dans lequel l'assemblage des éléments constitutifs de la préforme est réalisé par l'intermédiaire de bandes d'assemblage recouvrant les bords adjacents de ceux-ci.

6. Procédé selon l'une quelconque des revendications 1 à 5, dans lequel les éléments constitutifs de la préforme fibreuse sont réalisés par tissage tridimensionnel.

7. Procédé selon l'une quelconque des revendications 1 à 6, dans lequel les éléments constitutifs de la préforme fibreuse sont en fibres en céramique.

8. Procédé selon l'une quelconque des revendications 1 à 7, comprenant :
- la réalisation d'un élément en texture fibreuse en forme de bande,
- la réalisation d'incisions à travers la bande, les incisions s'étendant depuis un côté de la bande, sensiblement perpendiculairement à ce côté et sur une distance inférieure à la largeur de la bande,
- la découpe d'éléments en forme de secteurs dans une texture fibreuse,
- l'assemblage de chaque secteur avec la bande par liaison entre les bords du secteur et les bords d'une incision respective de la bande, chaque secteur étant ainsi inséré entre les bords d'une incision.

9. Procédé selon la revendication 8, dans lequel l'élément en forme de bande est réalisé par tissage tridimensionnel avec une épaisseur dans sa partie non incisée supérieure à son épaisseur dans sa partie incisée.

10. Procédé selon la revendication 8, dans lequel la première partie de préforme correspondant à la partie annulaire de la structure à lobes est obtenue en superposant à l'élément en forme de bande au moins une strate annulaire supplémentaire en texture fibreuse.

11. Procédé selon la revendication 10, dans lequel une strate annulaire supplémentaire recouvre des zones de départ des lobes de la deuxième partie de préforme correspondant à la jupe multilobée de la structure à lobes, au niveau des fonds des incisions formées dans l'élément en forme de bande.

12. Procédé selon l'une quelconque des revendications 1 à 7, comprenant :
- la réalisation d'une pluralité d'éléments en texture fibreuse comprenant chacun un secteur d'au moins une première strate annulaire constitutive de la première partie de préforme correspondant à la partie annulaire de la structure à lobes et un secteur de la deuxième partie de préforme correspondant à la jupe multilobée du mélangeur, et
- l'assemblage des éléments au moins le long de bords adjacents des secteurs de la deuxième partie de préforme correspondant à la jupe multilobée.

13. Procédé selon la revendication 12, dans lequel, pour former la première partie de préforme correspondant à la partie annulaire de la structure à lobes, on ajoute au moins une strate annulaire supplémentaire en texture fibreuse couvrant au moins les secteurs de la première strate annulaire.

14. Procédé selon la revendication 13, dans lequel une strate sensiblement annulaire supplémentaire recouvre les zones de départs des lobes de la deuxième partie de préforme correspondant à la jupe multilobée, de manière à renforcer ces zones de départs des lobes.

15. Mélangeur de flux en CMC de turbine à gaz, **caractérisé en ce qu'**il est obtenu par assemblage de plusieurs secteurs formant des structures à lobes fabriquées selon le procédé de l'une quelconque des revendications 1 à 14, ou **en ce qu'**il est formé par une structure à lobes fabriquée selon le procédé de l'une quelconque des revendications 1 à 14.

16. Moteur aéronautique à turbine à gaz à double flux équipé d'un mélangeur de flux selon la revendication 15.

## Claims

1. A method of fabricating a lobed structure for a gas turbine flow mixer having an annular upstream portion extended downstream by a portion forming a multilobed skirt having a plurality of lobes distributed around a longitudinal axis of the lobed structure, the method comprising:
· making a fiber preform out of refractory fibers and having a shape corresponding to the shape of the lobed structure to be fabricated, from a plurality of component elements of fiber texture that are assembled together and shaped by means of tooling of a shape corresponding to the shape of the lobed structure to be fabricated so as to obtain an assembled fiber preform having a first preform portion corresponding to the annular portion of the lobed structure and a second preform portion corresponding to the multilobed skirt of the lobed structure, the component elements of the fiber preform being assembled together at least in part along connection lines extending substantially in the flow direction of the flow past the lobes of the multilobed skirt preform portion; and
· densifying the assembled and shaped fiber preform by means of a matrix that is ceramic, at least in part.

2. A method according to claim 1, wherein the component elements of the preform are assembled together by stitching or by implanting yarns, needles, or pins.

3. A method according to any one of claims 1 and 2, wherein the component elements of the preform are assembled together along connection lines that extend along the flanks or the outer crests of the lobes of the second preform portion corresponding to the multilobed skirt.

4. A method according to any one of claims 1 to 3, wherein the component elements of the preform are assembled together with adjacent edges thereof overlapping.

5. A method according to any one of claims 1 to 3, wherein the component elements of the preform are assembled together by means of assembly strips overlapping the adjacent edges thereof.

6. A method according to any one of claims 1 to 5, wherein the component elements of the fiber preform are made by three-dimensional weaving.

7. A method according to any one of claims 1 to 6, wherein the component elements of the fiber preform are made of ceramic fibers.

8. A method according to any one of claims 1 to 7, comprising:
· making a fiber texture element in the form of a strip;
· making incisions through the strips, the incisions extending from one side of the strip, substantially perpendicularly to said side and over a distance that is less than the width of the strip;
· cutting out sector-shaped elements from a fiber texture; and
· assembling each sector with the strip by connecting together the edges of the sector and the edges of a corresponding incision in the strip, each sector thus being inserted between the edges of an incision.

9. A method according to claim 8, wherein the strip-shaped element is made by three-dimensional weaving with a thickness in its non-incised portion that is greater than its thickness in its incised portion.

10. A method according to claim 8, wherein the first preform portion corresponding to the annular portion of the lobed structure is obtained by superposing at least one additional annular ply of fiber texture on the strip-shaped element.

11. A method according to claim 10, wherein an additional annular ply covers the starter zones of the lobes of the second preform portion corresponding to the multilobed skirt of the lobed structure at the ends of the incisions formed in the strip-shaped elements.

12. A method according to any one of claims 1 to 7, comprising:
· making a plurality of fiber texture elements each comprising at least one sector of a first annular ply constituting the first preform portion corresponding to the annular portion of the lobed structure, and a sector of the second preform portion corresponding to the multilobed skirt of the mixer; and
· assembling together the elements at least along the adjacent edges of the sectors of the second preform portion corresponding to the multilobed skirt.

13. A method according to claim 12, wherein, in order to form the first preform portion corresponding to the annular portion of the lobed structure, at least one additional annular ply of fiber texture is added covering at least the sectors of the first annular ply.

14. A method according to claim 13, wherein an additional and substantially annular ply covers the starter zones of the lobes of the second preform portion corresponding to the multilobed skirt so as to reinforce the starter zones of the lobes.

15. A CMC gas turbine flow mixer, **characterized in that** it is obtained by assembling together a plurality of sectors forming lobed structures fabricated by the method of any one of claims 1 to 14, or **in that** it is constituted by a lobed structure fabricated according to the method of any one of claims 1 to 14.

16. A bypass gas turbine aeroengine fitted with a flow mixer according to claim 15.

## Patentansprüche

1. Verfahren zur Herstellung einer gelappten Struktur eines Strömungsmischers für eine Gasturbine, die einen vorderen ringförmigen Abschnitt aufweist, der durch einen Abschnitt nach hinten verlängert wird, der eine viellappige Schürze mit einer Vielzahl von Lappen formt, die um eine Längsachse der gelappten Struktur herum verteilt sind, wobei das Verfahren umfaßt:
- das Herstellen eines vorgeformten Faserrohlings aus hochtemperaturbeständigen Fasern, der eine Form aufweist, die der der herzustellenden gelappten Struktur entspricht, ausgehend von mehreren Fasertextur-Komponenten, die miteinander verbunden werden und mithilfe eines Werkzeugs, dessen Form der der herzustellenden gelappten Struktur entspricht, geformt werden, um einen vorgeformten Faserrohling zu erhalten, zusammengesetzt aus einem ersten vorgeformten Rohlingsabschnitt, der dem ringförmigen Abschnitt der gelappten Struktur entspricht, und einem zweiten vorgeformten Rohlingsabschnitt, der der viellappigen Schürze der gelappten Struktur entspricht, wobei die Verbindung der Komponenten des vorgeformten Faserrohlings mindestens zum Teil entlang von Verbindungslinien hergestellt wird, die im Wesentlichen in der Strömungsrichtung an den Lappen des vorgeformten Rohlingsabschnitts der viellappigen Schürze verlaufen, und
- das Verdichten des geformten und zusammengesetzten vorgeformten Faserrohlings durch eine Matrize, die mindestens teilweise aus Keramik ist.

2. Verfahren nach Anspruch 1, wobei das Verbinden der Komponenten des vorgeformten Rohlings durch Nähen oder durch Implantieren von Drähten, Nadeln oder Stiften erfolgt.

3. Verfahren nach einem der Ansprüche 1 und 2, wobei das Verbinden der Komponenten des vorgeformten Rohlings entlang von Verbindungslinien erfolgt, die auf den äußeren Scheiteln der Lappen des zweiten vorgeformten Rohlingsabschnitts verlaufen, der der viellappigen Schürze entspricht.

4. Verfahren nach einem der Ansprüche 1 bis 3, wobei das Verbinden der Komponenten des vorgeformten Rohlings mit Überlappung ihrer benachbarten Ränder durchgeführt wird.

5. Verfahren nach einem der Ansprüche 1 bis 3, wobei das Verbinden der Komponenten des vorgeformten Rohlings mithilfe von Verbindungsstreifen durchgeführt wird, die ihre benachbarten Ränder überlappen.

6. Verfahren nach einem der Ansprüche 1 bis 5, wobei die Komponenten des vorgeformten Faserrohlings durch dreidimensionales Weben hergestellt werden.

7. Verfahren nach einem der Ansprüche 1 bis 6, wobei die Komponenten des vorgeformten Faserrohlings aus Keramikfasern sind.

8. Verfahren nach einem der Ansprüche 1 bis 7, umfassend:
- das Herstellen eines streifenförmigen Fasertexturelements,
- das Herstellen von Einschnitten quer durch den Streifen, wobei die Einschnitte von einer Seite des Streifens im Wesentlichen rechtwinklig zu dieser Seite und auf einer Länge kleiner als die Breite des Streifens verlaufen,
- das Ausschneiden von sektorförmigen Elementen aus einer Fasertextur,
- das Verbinden jedes Sektors mit dem Streifen durch Verbindung zwischen den Rändern des Sektors und den Rändern eines jeweiligen Einschnitts des Streifens, wodurch jeder Sektor zwischen den Rändern eines Einschnitts eingefügt wird.

9. Verfahren nach Anspruch 8, wobei das streifenförmige Element durch dreidimensionales Weben mit einer Dicke hergestellt wird, die in seinem nicht eingeschnittenen Teil größer ist als seine Dicke in seinem eingeschnittenen Teil.

10. Verfahren nach Anspruch 8, wobei der erste Abschnitt des vorgeformten Rohlings, der dem ringförmigen Abschnitt der gelappten Struktur entspricht, erhalten wird, indem mindestens eine zusätzliche ringförmige Fasertexturlage auf das streifenförmige Element aufgebracht wird.

11. Verfahren nach Anspruch 10, wobei eine zusätzliche ringförmige Faserstrukturlage die Ansatzzone der Lappen des zweiten vorgeformten Rohlingsabschnitts, der der viellappigen Schürze der gelappten Struktur entspricht, am Boden der Einschnitte bedeckt, die im streifenförmigen Element geformt sind.

12. Verfahren nach einem der Ansprüche 1 bis 7, umfassend:
- das Herstellen einer Vielzahl von Fasertexturelementen, jedes umfassend einen Sektor mit mindestens einer ersten ringförmigen Lage, die den ersten Abschnitt des vorgeformten Rohlings bildet, der dem ringförmigen Abschnitt der gelappten Struktur entspricht, und einen Sektor des zweiten Abschnitts des vorgeformten Rohlings, der der viellappigen Schürze des Mischers entspricht, und
- das Verbinden der Elemente mindestens entlang benachbarter Ränder der Sektoren des zweiten Abschnitts des vorgeformten Rohlings, der der viellappigen Schürze entspricht.

13. Verfahren nach Anspruch 12, wobei zum Formen des ersten Abschnitts des vorgeformten Rohlings, der dem ringförmigen Abschnitt der gelappten Struktur entspricht, mindestens eine zusätzliche ringförmige Fasertexturlage hinzugefügt wird, die mindestens die Sektoren der ersten ringförmigen Lage bedeckt.

14. Verfahren nach Anspruch 13, wobei eine zusätzliche, im Wesentlichen ringförmige Lage die Ansatzzonen der Lappen des zweiten Abschnitts des vorgeformten Rohlings bedeckt, der der viellappigen Schürze entspricht, um diese Ansatzzonen der Lappen zu verstärken.

15. Strömungsmischer aus keramischem Verbundwerkstoff für eine Gasturbine, **dadurch gekennzeichnet, daß** er durch Verbindung mehrerer Sektoren erhalten wird, die gelappte Strukturen formen und dem Verfahren nach einem der Ansprüche 1 bis 14 gemäß hergestellt wurden, oder **dadurch**, daß er aus einer gelappten Struktur geformt ist, die dem Verfahren nach einem der Ansprüche 1 bis 14 gemäß hergestellt wurde.

16. Doppelstromturbinen-Flugzeugmotor, ausgestattet mit einem Strömungsmischer nach Anspruch 15.
